# EUROPÄISCHE PATENTSCHRIFT

(11) **EP 1 153 806 B1**
(45) Veröffentlichungstag und Bekanntmachung des Hinweises auf die Patenterteilung: **31.05.2006**
(21) Anmeldenummer: 01109468.7
(22) Anmeldetag: 24.04.2001
(51) Int. Cl.: B60R 21/20

(54) **Gehäuse für ein Gassackmodul und Insassen-Sicherheitsvorrichtung**
Housing for an air bag module and occupant safety device
Boîtier pour module de coussin gonflable et dispositif de sécurité pour occupant

(30) Priorität: 12.05.2000 DE 20008543 U
(43) Veröffentlichungstag der Anmeldung: 14.11.2001
(73) Patentinhaber: TRW Automotive GmbH, 73553 Alfdorf (DE)
(72) Erfinder: Herzog, Frank, 73655 Plüderhausen (DE); Scherr, Jürgen, 73550 Waldstetten (DE); Fischer, Anton, 73579 Leinweiler (DE)
(74) Vertreter: Kitzhofer, Thomas

(56) Entgegenhaltungen:
- EP-A- 0 795 445
- DE-A- 19 612 229
- DE-A- 19 812 737
- DE-U- 29 806 080

## Beschreibung

Die Erfindung betrifft ein Gehäuse für einen Seitengassack einer Fahrzeuginsassen-Sicherheitseinrichtung gemäß dem Oberbegriff des Anspruchs 1. Ein derartiges Gehäuse ist aus der DE-A-197 52 989 bekannt.

Ferner betrifft die Erfindung eine Insassen-Sicherheitsvorrichtung mit einem erfindungsgemäßen Gehäuse.

Es sind Seitengassäcke, sogenannte ABC-Gassäcke, bekannt, die sich in Längsrichtung über einen weiten Bereich der Seitenscheiben eines Fahrzeugs erstrecken und die vor ihrem Einsatz zusammengefaltet in einem langgestreckten, am Dachrahmen befestigten Gehäuse angeordnet sind. Da in diesem Bereich des Dachrahmens aber auch andere Teile wie z.B. Handgriffe oder, im hinteren Fahrzeugteil, Gepäcknetzstangen angebracht werden müssen, sind Lösungen erforderlich, um diese Bauteile trotz des dazwischenliegenden Gassackgehäuses sicher befestigen zu können. Zu diesem Zweck ist es bekannt, im Gehäuse Durchführungen vorzusehen, durch die beispielsweise die Haltegriffe am Dachrahmen verschraubt werden können. Damit der Gassack nicht beschädigt wird und das Gehäuse nicht beim Anschrauben eines Bauteils zusammengedrückt wird, sind diese Durchführungen mit Stahlhülsen versehen. Solche Hülsen sind relativ teuer und müssen außerdem nachträglich in ein aus Kunststoff bestehendes Gassackgehäuse eingebracht werden, was einen hohen Fertigungsaufwand mit sich bringt.

Der Erfindung stellt sich die Aufgabe, ein vielseitig einsetzbares Gassackgehäuse zu schaffen, das auf einfache Weise herstellbar ist und aus möglichst wenigen Einzelteilen besteht.

Dies wird bei einem Gehäuse der eingangs genannten Art dadurch erreicht, daß an der ersten Seitenwand wenigstens ein Vorsprung angeformt ist, der mit der ersten Seitenwand einstückig ausgebildet ist und sich in Richtung zur zweiten Seitenwand erstreckt, daß in der zweiten Seitenwand eine Aussparung vorgesehen ist, die sich wenigstens im Bereich zwischen dem Vorsprung und dem Steg erstreckt, und daß am Gehäuse eine Klappe einstückig angeformt ist, die die Aussparung in der zweiten Seitenwand nach Verschwenken der Klappe in die geschlossene Stellung wenigstens teilweise verschließen kann. Die Ausbildung von Vorsprüngen in einer Seitenwand erlaubt es, die Geometrie des Gehäuses vielen Erfordernissen anzupassen. Aufgrund der in der gegenüberliegenden Seitenwand angeordneten Aussparung, die sich vorzugsweise vom Vorsprung zum Steg und damit über einen vom Vorsprung gebildeten Hinterschnitt zwischen Vorsprung und Steg erstreckt, kann das Gehäuse einstückig in einer bekannten Spritzgußtechnik unter Verwendung eines Kerns gefertigt werden. Über die während des Spritzgießens angeformte Klappe läßt sich das Gehäuse im Bereich der Aussparung später verschließen, um den Gassack vor Schmutz und Beschädigungen zu schützen. Da das Gehäuse aus nur einem Teil besteht, entfallen weitere Fertigungsschritte zum Zusammenbau des Gehäuses, es muß lediglich die Klappe geschlossen werden. Das Gehäuse nach der Erfindung ist deshalb deutlich leichter herstellbar als z.B. das in der DE 298 13 692 U1 beschriebene, das ohne Klappe ausgeführt ist und bei dem nur auf der dem Fahrzeuginnenraum zugewandten Seite ein separater Deckel auf das Gasführungsrohr aufgeclipst wird, um eine Gehäuseaussparung für die Handgriffdurchführung einseitig zu schließen.

Fertigungstechnisch ist es besonders günstig, wenn die Klappe am Steg angeformt ist, da so Hinterschnitte vermieden werden können.

In einer bevorzugten Ausführungsform der Erfindung weist der Vorsprung eine Durchgangsöffnung auf und bildet eine Durchführung durch das Gehäuse. Eine Durchführung im Gassackgehäuse bietet die Möglichkeit, Bauteile, die sich in den Fahrzeuginnenraum erstrecken sollen, am Dachrahmen zu befestigen.

Vorzugsweise erstreckt sich der Vorsprung bis zur zweiten Seitenwand, vorzugsweise ohne mit dieser einstückig verbunden zu sein, so daß seine Wandungen einen Schutz für den Gassack vor dem hindurchgeführten Bauteil bieten, als Führung für das Bauteil und als Abstandshalter für die Seitenwände dienen können.

Besonders vorteilhaft erstreckt sich die Durchführung senkrecht zur Längsachse des Gehäuses, um die Montage der Bauteile zu erleichtern. Unter der Längsachse des Gehäuses ist hier die Richtung der größten Längsausdehnung des Gassackgehäuses, also entlang des Dachrahmens, zu verstehen.

In einer weiteren bevorzugten Ausführungsform der Erfindung weist die Klappe wenigstens eine Öffnung auf, die bei geschlossener Klappe mit der Durchführung durch das Gehäuse fluchtet. Auf diese Weise läßt sich eine sichere und dichte Verbindung schaffen, die das Gehäuse gegenüber der Durchführung abschließt.

Vorzugsweise weist die Klappe ein Befestigungselement auf, das bei geschlossener Klappe an der zweiten Seitenwand angreift und die Klappe lagefixiert. In einer anderen Ausführungsform weist die Klappe ein Befestigungselement auf, das bei geschlossener Klappe am Vorsprung angreift und die Klappe lagefixiert. In beiden Fällen lassen sich die Befestigungselemente einfach während des Spritzgußprozesses anformen.

Das Befestigungselement an der Klappe ist vorteilhafterweise eine Leiste, die zum Schließen der Klappe nur auf die Innenseite der zweiten Seitenwand geschoben werden muß, um die Klappe am Gehäuse zu fixieren.

Vorzugsweise sind an wenigstens einer Seitenwand Verschlußelemente angeformt, die das Gehäuse verschließen können. Durch die Befestigung der beiden Seitenwände am dem Steg entgegengesetzten Ende des Gehäuses aneinander läßt sich das Gehäuse bis zur Aktivierung des Gassackes verschlossen halten und so der Gassack vor Beschädigung und Verschmutzung schützen. Die Verschlußelemente sind auf bekannte Weise so ausgebildet, daß der Gassack bei seiner Entfaltung das Gehäuse leicht öffnen kann.

Die Erfindung betrifft auch eine Insassen-Sicherheitsvorrichtung, mit einem erfindungsgemäßen Gehäuse und einem in diesem untergebrachten Seitengassack, wobei der Vorsprung eine Durchgangsöffnung zur Bildung einer Durchführung aufweist und ein an einem Dachrahmen eines Fahrzeugs befestigtes Teil, wie etwa eine Gepäcknetzstange oder ein Handgriff, durch die Durchführung hindurch ragt.

Außerdem läßt sich das Gehäuse vorteilhaft über wenigstens eine der Durchführungen an einem Bauteil oder dem Dachrahmen befestigen.

Weitere Merkmale und Vorteile werden im Rahmen der nachfolgenden Beschreibung mehrerer Ausführungsbeispiele im Zusammenhang mit den beigefügten Zeichnungen deutlich. In diesen zeigen:
Figur 1 einen Schnitt durch ein Gassackmodul mit einem erfindungsgemäßen Gehäuse auf der Höhe eines Sacklochs, mit geöffneter Klappe,
Figur 2 das Gehäuse nach Figur 1, eingesetzt in einen Halter,
Figur 3 ein erfindungsgemäßes Gehäuse gemäß einer zweiten Ausführungsform mit geöffneter Klappe,
Figur 4a das Gehäuse nach Figur 3 mit geschlossener Klappe,
Figur 4b eine perspektivische Teilansicht einer Insassen-Sicherheitsvorrichtung mit einem erfindungsgemäßen Gehäuse nach Figur 3 von dessen erster Seitenwand aus gesehen,
Figur 4c eine perspektivische Teilansicht des Gehäuses nach Figur 4b, von der zweiten Seitenwand aus gesehen,
Figur 5 eine Seitenansicht eines erfindungsgemäßen Gehäuses gemäß einer dritten Ausführungsform,
Figur 6 einen Schnitt durch das Gehäuse nach Figur 5 entlang der Linie A-A,
Figur 7 einen Schnitt durch das Gehäuse nach Figur 5 entlang der Linie B-B,
Figur 8 einen Schnitt durch das Gehäuse nach Figur 5 entlang der Linie C-C,
Figuren 9 und 10 perspektivische Teilansichten des Gehäuses nach Figur 5,
Figur 11 einen Schnitt entlang der Linie E-E in Figur 10, und
Figur 12 einen Schnitt entlang der Linie F-F in Figur 9.

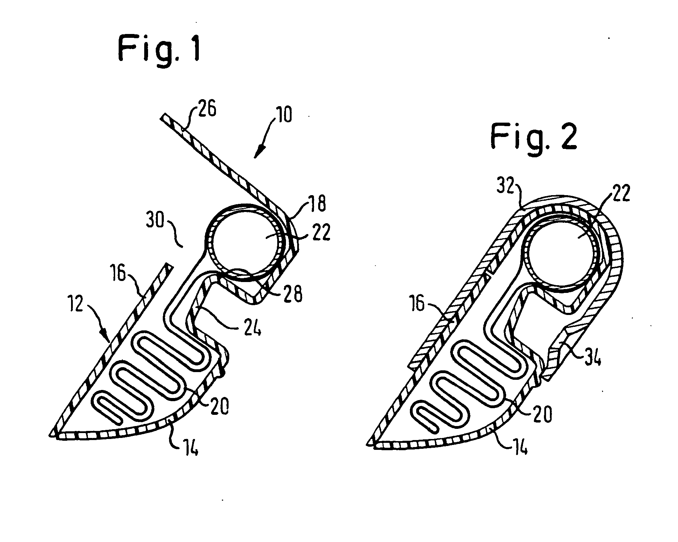

Die Figuren 1 und 2 zeigen ein Gassackmodul 10 mit einem erfindungsgemäßen Gehäuse 12 gemäß einer ersten Ausführungsform.

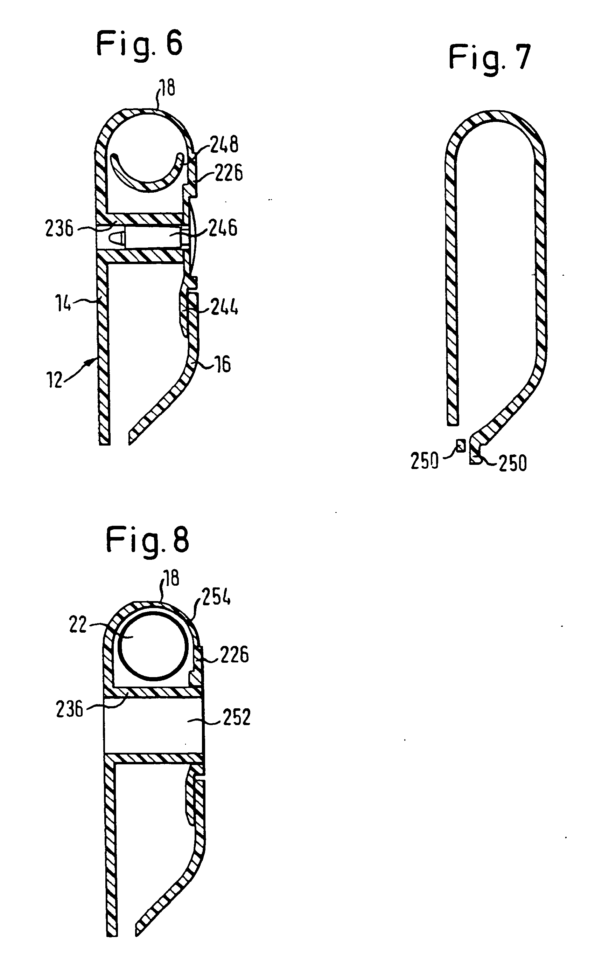

Das Gehäuse 12 weist eine erste Seitenwand 14 und eine zweite Seitenwand 16 auf, die jeweils einstückig an einem Ende mit einem Steg 18 verbunden sind, der über die gesamte Länge des Gehäuses verläuft. Der Steg 18 befindet sich im eingebauten Zustand des Gassackgehäuses auf der Oberseite des Gehäuses, während die Seitenwände im wesentlichen senkrecht nach unten weisen und einen Schußkanal für den austretenden Gassack bilden. Das Gehäuse 12, das in den Figuren im Schnitt gezeigt ist, weist eine große Längsausdehnung senkrecht zur Schnittrichtung auf und erstreckt sich im eingebauten Zustand im Fahrzeug im wesentlichen von der A- bis zur C-Säule längs des Dachrahmens. Der Querschnitt des Gehäuses 12 ist annähernd U-förmig (vgl. Figur 7).

Das Gehäuse 12 dient zur Aufnahme eines Seitengassacks 20, der vor seiner Aktivierung gefaltet darin angeordnet ist. Auch im Gehäuse angeordnet, in der Nähe des Stegs 18, ist eine sogenannte Gaslanze 22, über die der Gassack 20 bei seiner Aktivierung mit Gas gefüllt wird.

Die beiden Seitenwände 14, 16 sind an ihren dem Steg 18 entgegengesetzten Enden über bekannte Rastmechanismen miteinander verbunden, um das Gehäuse zu schließen und den Gassack vor Beschädigungen und Verschmutzung zu schützen.

Die erste Seitenwand 14 weist an wenigstens einer Stelle einen Vorsprung 24 auf, der sich ins Innere des Gehäuses 12 erstreckt. Am Steg 18 ist als Teil der zweiten Seitenwand 16 eine Klappe 26 angeformt, gleichzeitig weist die zweite Seitenwand 16 im Bereich des Vorsprungs 24 eine Aussparung 30 auf, die sich vom dem Steg 18 zugewandten Ende 28 des Vorsprungs bis zum Steg 18 erstreckt.

Die Klappe 26 ist am Steg 18 angeformt und kann in Richtung des Gehäuseinneren, d.h. zur zweiten Seitenwand 16, geklappt werden, so daß bei geschlossener Klappe 26 die Aussparung 30 und damit der den Gassack aufnehmende Raum innerhalb des Gehäuses vollständig verschlossen ist.

In dieser Ausführungsform ist vorgesehen, daß das Gassackmodul 10 in einem Halter 32 montiert wird, der wiederum am Dachrahmen eines Fahrzeugs befestigt wird. Der Halter 32 kann auch dazu eingesetzt werden, die Klappe 26 geschlossen zu halten, so daß auf entsprechende Befestigungselemente verzichtet werden kann.

Die Klappe kann auch über bekante Vorrichtungen an der zweiten Seitenwand 16 fixiert werden.

Im Halter 32 sind im Bereich des oder der Vorsprünge 24 Öffnungen 34 vorgesehen, in die nicht gezeigte Schrauben zur Befestigung von Fahrzeugteilen, z.B. Handgriffen (nicht gezeigt), am Halter 32 eingeschraubt werden können. Aufgrund der an dieser Stelle zu einem Sackloch, nämlich dem Vorsprung 24, geformten ersten Seitenwand 14 ist der Gassack 20 vor Kontakt mit dem Schraubenende geschützt.

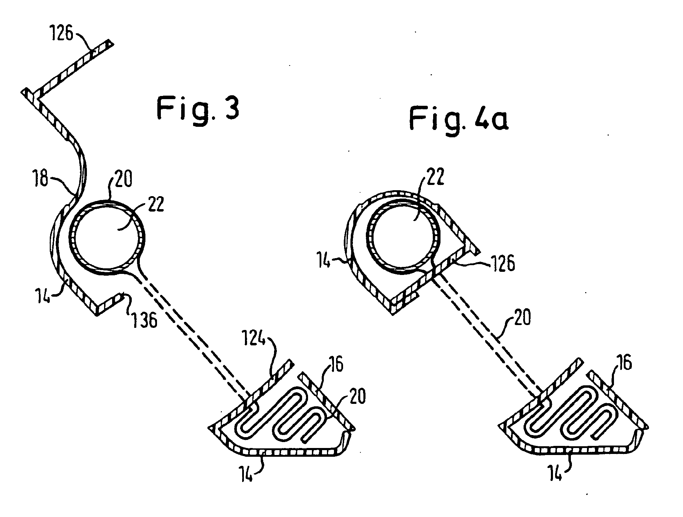

Eine zweite Ausführungsform der Erfindung, die in den Figuren 3 bis 4c dargestellt ist, unterscheidet sich von der eben beschriebenen dadurch, daß sich ein Vorsprung 124 im wesentlichen bis zur zweiten Seitenwand 16 erstreckt, wobei das zur zweiten Seitenwand 16 gerichtete Ende des Vorsprungs 124 offen ist, so daß eine Durchgangsöffnung entsteht, die eine Durchführung 136 durch das Gehäuse 12 bildet. Für bereits aus der ersten Ausführungsform bekannte Bauteile werden die dort eingeführten Bezugszeichen beibehalten.

Auch der Gassack 20 weist an der entsprechenden Stelle einen Durchbruch auf, was in der Zeichnung durch gestrichelte Linien dargestellt ist.

Am Steg 18 ist eine Klappe 126 angeformt, während die zweite Seitenwand 16 eine Aussparung 130 aufweist, die sich um die Durchführung 136 herum und bis zum Steg 18 erstreckt. Wird die Klappe 126 geschlossen, bedeckt sie den Bereich zwischen dem dem Steg zugewandten Ende der Durchführung 136 und dem Steg 18 und läßt die Durchführung 136 frei. Die Wandungen 138 der Durchführung 136 schließen zusammen mit Lappen 140, die an der Klappe 126 ausgebildet sind, bei geschlossener Klappe das Innere des Gehäuses 12 ab und schützen den Gassack vor Verschmutzung und Beschädigung. Die Wandungen 138 können bis zum zweiten Seitenteil 16 reichen, da die Aussparung 130 so angeordnet ist, daß eine Entformung des Gehäuses aus dem Gußwerkzeug möglich ist.

Über an der Klappe 126 und an der Durchführung 136 angeformte Befestigungselemente 142 läßt sich die Klappe lagefest am Gehäuse fixieren. Die Befestigungselemente 142 können herkömmliche Rastelemente sein.

Bei der Montage des Gassackmoduls wird die Klappe 126 geschlossen, wobei auch ausgenutzt werden kann, daß bei geöffneter Klappe 126 das Einlegen des Gassacks 20 um die Durchführung 136 herum vereinfacht ist. Das Gehäuse 12 mit geschlossener Klappe 126 kann anschließend, wie in der ersten Ausführungsform dargestellt, im Halter 32 montiert und mit diesem am Fahrzeug, z.B. am Dachrahmen, befestigt werden.

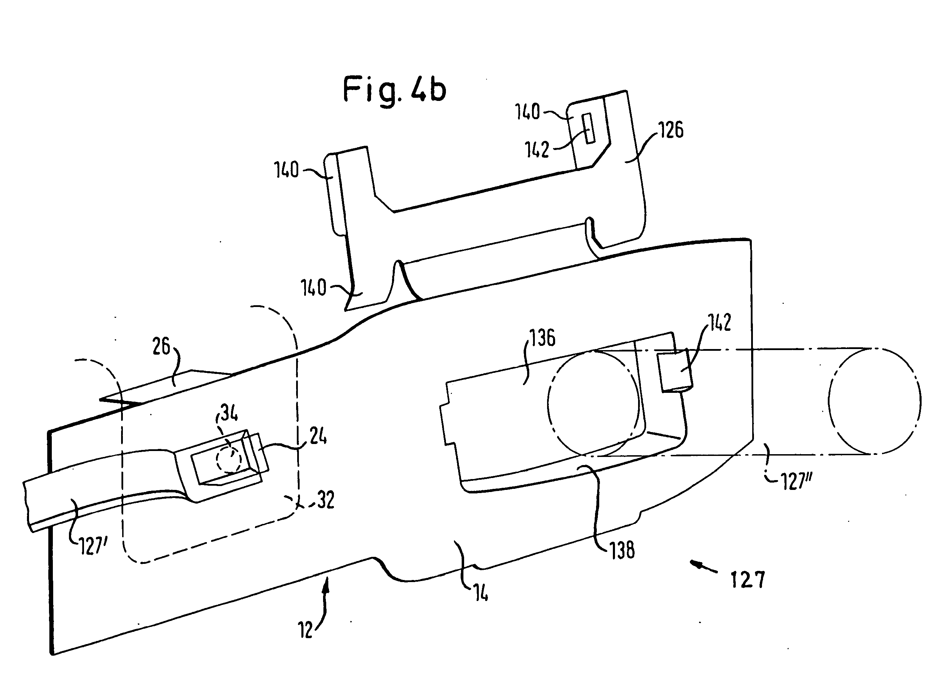

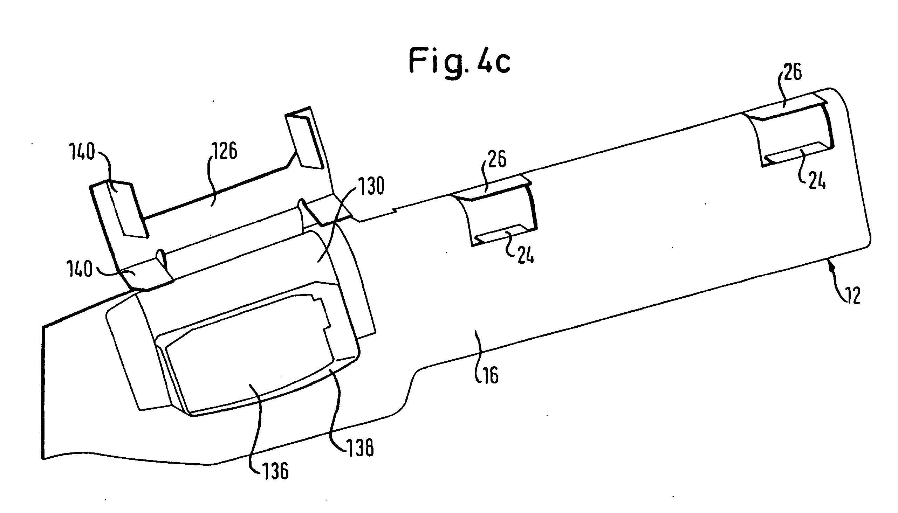

Die Figuren 4b und 4c zeigen ein Gehäuse nach den beiden soeben beschriebenen Ausführungsformen, Figur 4b zeigt das Gehäuse als Teil einer Insassen-Sicherheitsvorrichtung 127, die das dargestellte Gehäuse 12 sowie einen Handgriff 127' und eine Gepäcknetzstange 127" umfaßt. Der Handgriff 127' wird in den Öffnungen 34 des Halters 32 (mit gestrichelten Linien angedeutet) verschraubt, wobei die Enden der Schrauben in die von den Vorsprüngen 24 gebildeten Sacklöcher hineinragen. Die Durchführung 136 nimmt z.B. eine am Dachrahmen befestigte Gepäcknetzstange 127" auf.

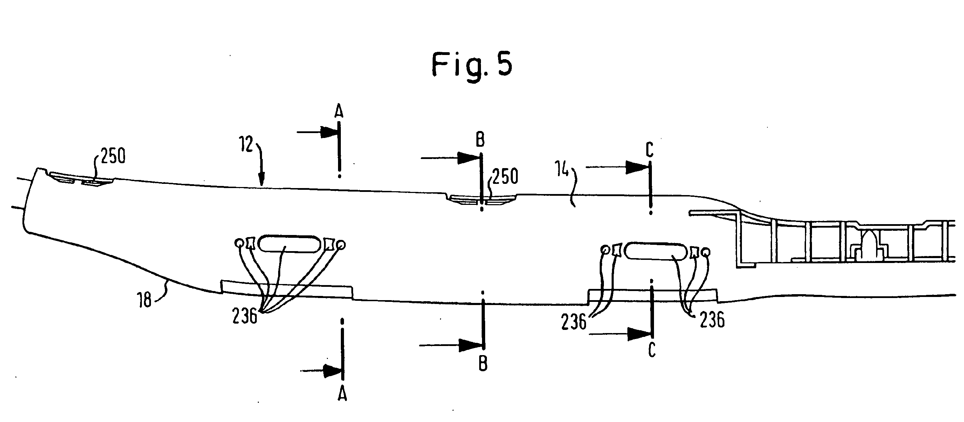

In den Figuren 5 bis 12 ist eine dritte Ausführungsform der Erfindung gezeigt. Das im folgenden beschriebene Gehäuse 12 unterscheidet sich von dem zuvor beschriebenen vor allem dadurch, daß alle an der ersten Seitenwand 14 angeformten Vorsprünge als Durchführungen 236, 236' ausgebildet sind.

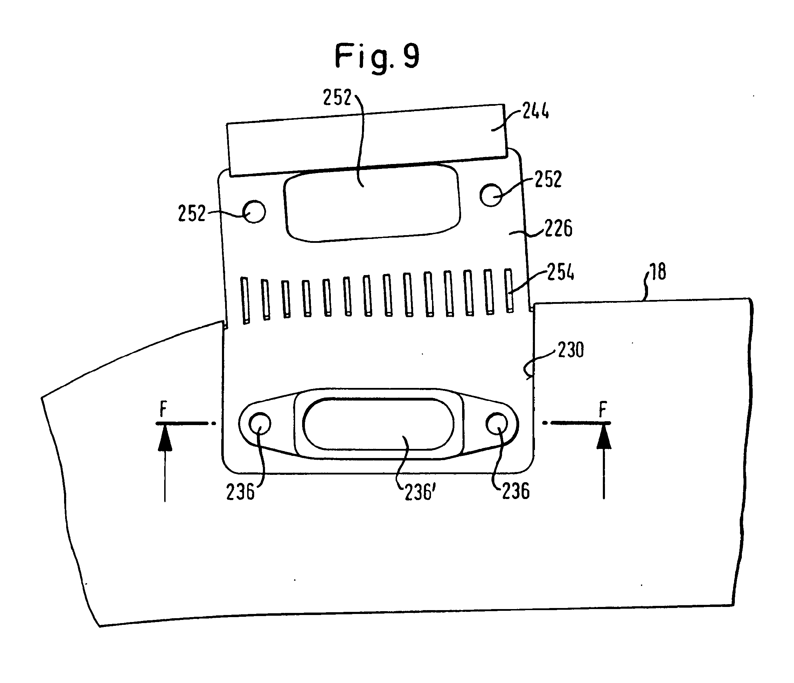

Figur 6 zeigt einen Schnitt entlang der Linie A-A aus Figur 5 durch eine erste Durchführung 236. Wie in den zuvor beschriebenen Ausführungsformen ist eine Klappe 226 am Steg 18 angeformt. Die Klappe 226 weist Öffnungen 252 (siehe auch Figuren 9 bis 11) auf, die bei geschlossener Klappe deckungsgleich über den Durchführungen 236 liegen und mit diesen fluchten, so daß das Innere des Gehäuses 12 geschlossen werden kann, wobei die Durchführungen 236, 236' natürlich frei bleiben.

Auch in dieser Ausführungsform sind Aussparungen 230 in der zweiten Seitenwand 16 vorgesehen, die notwenig sind, um das Bauteil aus seiner Spritzgußform entformen zu können. Die Aussparung 230 erstreckt sich, wie in Figur 9 zu sehen ist, über einen Bereich, der die Durchführungen 236, 236' und den Zwischenraum zwischen den Durchführungen und dem Steg 18 einschließt.

Die Klappe 226 weist an ihrem vom Steg 18 abgewandten Ende ein Befestigungselement 244 in Form einer Leiste auf. Bei geschlossener Klappe hintergreift die Leiste 244 die zweite Seitenwand 16 auf der Innenseite des Gehäuses 12 und fixiert auf diese Weise die Lage der Klappe 226. Zusätzlich kann, wie hier gezeigt, die Klappe durch einen Bolzen 246, z.B. einem Tannenbaumklipp, am Gehäuse 12 befestigt sein. Die Durchführung 236 kann auch dazu verwendet werden, das Gehäuse 12 an einem fahrzeugfesten Teil zu befestigen.

Außerdem ist in der Nähe des Stegs 18 in dieser Ausführungsform eine Halterung 248 für die Gaslanze 22 (hier nicht gezeigt) angeformt. Diese Halterung 248 muß sich nicht über die gesamte Länge des Gehäuses 12 erstrecken.

Die Durchführungen 236, 236' sind nur an bestimmten Stellen des Gehäuses 12 angeordnet. Figur 7 zeigt einen Schnitt durch das Gehäuse 12 an einer Stelle ohne Durchführungen. Das Gehäuse 12 ist an dieser Stelle annähernd U-förmig, und beide Seitenwände 14, 16 verlaufen geradlinig. Am vom Steg 18 abgewandten Ende weisen die Seitenwände an bestimmten Stellen (vgl. Figuren 5, 7) Verschlußelemente 250 auf, über die das Gehäuse 12 auf bekanntem Wege verschlossen werden kann.

Figur 8 zeigt einen Schnitt durch das Gehäuse 12 entlang der Linie C-C durch eine weitere Durchführung 236'. Wie in Figur 5 zu sehen, ist diese Durchführung langgestreckt ausgeführt, um fahrzeugfeste Teile, z.B. einen Handgriff, nachträglich montieren zu können, wenn das Gassackgehäuse bereits am Fahrzeug befestigt ist. In Figur 8 ist auch eine in das Gehäuse 12 eingelegte Gaslanze 22 gezeigt.

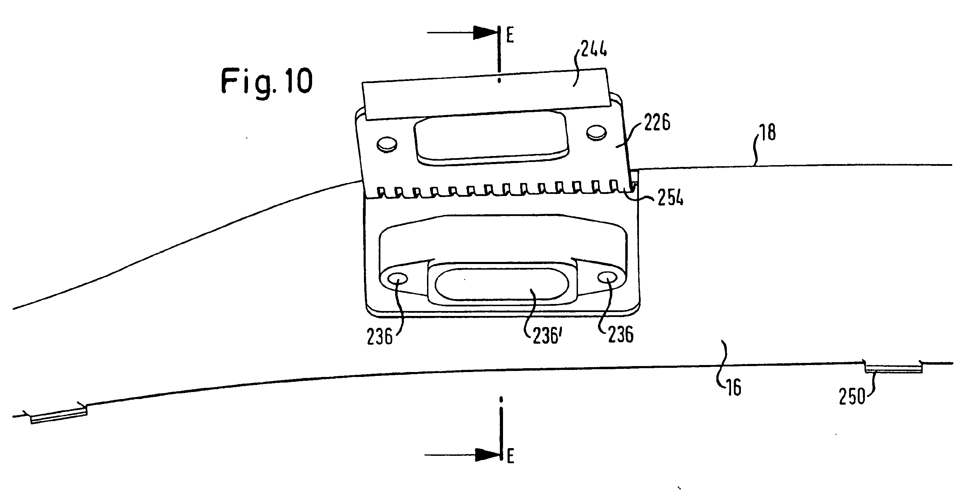

Figuren 9 und 10 zeigen die Klappe 226 im geöffneten Zustand. Um die Biegsamkeit der Klappe 226 in der Nähe des Stegs 18 zu erhöhen, kann ein Scharnier 254 vorgesehen sein, z.B. in Form eines Filmscharniers wie in den Figuren 6 und 8, oder in der Form paralleler Schlitze wie in den Figuren 9 und 10.

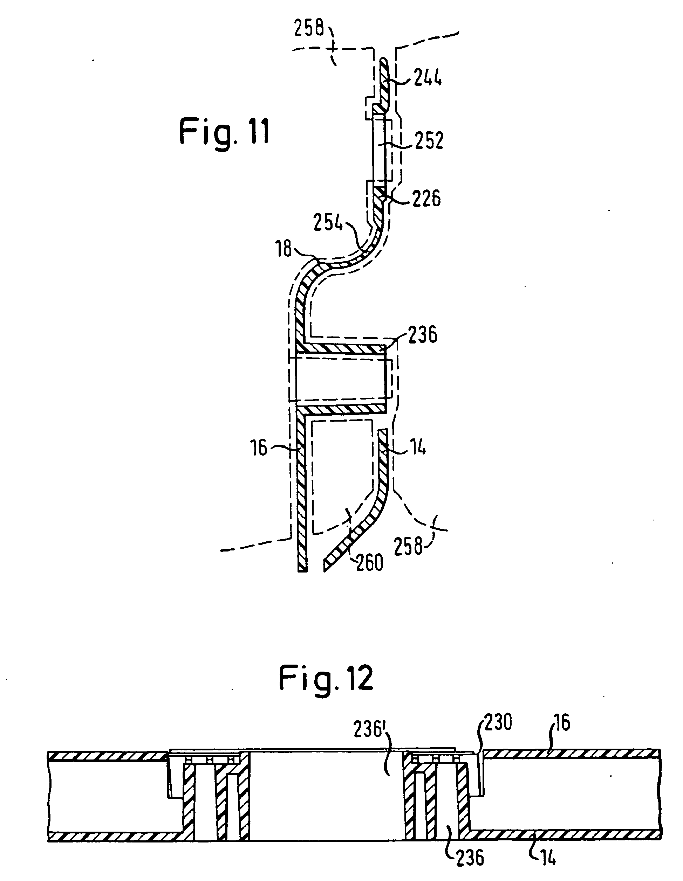

Figur 12 zeigt einen Schnitt durch die verschiedenen Durchführungen 236. Durch unterschiedliche Höhen der Durchführungen 236, 236' läßt sich, bei entsprechender Anpassung der Gestaltung der Klappe 226 ein dichter Abschluß des Gehäuses sowie eine weitere Lagefixierung der Klappe 226 erreichen.

Für alle gezeigten Ausführungsformen gilt, daß sich das Gehäuse aufgrund der Aussparungen 30, 130, 230 trotz des durch den Vorsprung 24 oder die Durchführungen 136, 236, 236' entstehenden Hinterschnitte in einem bekannten Spritzgußwerkzeug 258 (in Figur 11 mit gestrichelten Linien angedeutet) unter Verwendung eines Kerns 260 einstückig in einem einzigen Spritzgußprozeß fertigen läßt. Da das Gehäuse 12 mit geöffneten Klappen 26, 126, 226 gefertigt wird, sind auch die Klappen bei der Entformung aus dem Werkzeug nicht im Weg.

## Patentansprüche

1. Gehäuse für einen Seitengassack einer Fahrzeuginsassen-Sicherheitsvorrichtung, mit einer ersten und einer zweiten Seitenwand (14, 16) und einem die beiden Seitenwände (14, 16) verbindenden und einstückig mit diesen ausgebildeten Steg (18), wobei an der ersten Seitenwand (14) wenigstens ein Vorsprung (24; 124) angeformt ist, der mit der ersten Seitenwand (14) einstückig ausgebildet ist und sich in Richtung zur zweiten Seitenwand (16) erstreckt, **dadurch gekennzeichnet, daß** in der zweiten Seitenwand (16) eine Aussparung (30; 130; 230) vorgesehen ist, die sich wenigstens im Bereich zwischen dem Vorsprung (24; 136; 236, 236') und dem Steg (18) erstreckt, und daß am Gehäuse (12) eine Klappe (26; 126; 226) einstückig angeformt ist, die die Aussparung (30; 130; 230) in der zweiten Seitenwand (16) wenigstens teilweise verschließen kann.

2. Gehäuse nach Anspruch 1, **dadurch gekennzeichnet, daß** die Klappe (26; 126; 226) am Steg (18) angeformt ist.

3. Gehäuse nach einem der vorhergehenden Ansprüche, **dadurch gekennzeichnet, daß** sich der Vorsprung (236) bis zur zweiten Seitenwand (16) erstreckt, vorzugsweise ohne mit dieser einstückig oder fest verbunden zu sein.

4. Gehäuse nach einem der vorhergehenden Ansprüche, **dadurch gekennzeichnet, daß** der Vorsprung (136; 236, 236') eine Durchgangsöffnung aufweist und eine Durchfihrung durch das Gehäuse (12) bildet.

5. Gehäuse nach Anspruch 4, **dadurch gekennzeichnet, daß** sich die Durchführung (136; 236, 236') senkrecht zur Längsachse des Gehäuses (12) erstreckt.

6. Gehäuse nach Anspruch 4 oder 5, **dadurch gekennzeichnet, daß** die Klappe (226) wenigstens eine Öffnung (252) aufweist, die bei geschlossener Klappe mit der Durchführung (236, 236') durch das Gehäuse (12) fluchtet.

7. Gehäuse nach einem der vorhergehenden Ansprüche, **dadurch gekennzeichnet, daß** die Klappe (226) ein Befestigungselement (244) aufweist, das bei geschlossener Klappe (226) an der zweiten Seitenwand (16) angreift und die Klappe (226) lagefixiert.

8. Gehäuse nach Anspruch 7, **dadurch gekennzeichnet, daß** das Befestigungselement (244) eine Leiste ist.

9. Gehäuse nach einem der Ansprüche 4 bis 6, **dadurch gekennzeichnet, daß** die Klappe (126) ein Befestigungselement (142) aufweist, das bei geschlossener Klappe (126) an der Durchführung (136) angreift und die Klappe (126) lagefixiert.

10. Gehäuse nach einem der vorhergehenden Ansprüche, **dadurch gekennzeichnet, daß** es ein Kunststoffgußteil ist.

11. Gehäuse nach einem der vorhergehenden Ansprüche, **dadurch gekennzeichnet, daß** an wenigstens einer Seitenwand (14, 16) Verschlußelemente (250) angeformt sind, die das Gehäuse (12) verschließen können.

12. Insassen-Sicherheitsvorrichtung, mit einem Gehäuse nach einem der vorhergehenden Ansprüche und einem im Gehäuse (12) untergebrachten Seitengassack (20), wobei der Vorsprung eine Durchgangsöffnung zur Bildung einer Durchführung aufweist und ein an einem Dachrahmen befestigtes Teil durch die Durchführung (136; 236) hindurchragt.

13. Insassen-Sicherheitsvorrichtung nach Anspruch 12, **dadurch gekennzeichnet, daß** das Teil eine Gepäcknetzstange oder ein Handgriff ist.

14. Insassen-Sicherheitsvorrichtung nach Anspruch 12 oder 13, **dadurch gekennzeichnet, daß** über wenigstens eine der Durchführungen (136; 236) das Gehäuse (12) an einem Dachrahmen oder an einem daran angeordneten Teil befestigbar ist.

## Claims

1. A housing for a side gas bag of a vehicle occupant safety device, comprising a first and a second side wall (14, 16) and a web (18) connecting the two side walls (14, 16) and constructed in one piece therewith, at least one projection (24; 124) being formed integrally with the first side wall (14) and being constructed in one piece with the first side wall (14) and extending towards the second side wall (16), **characterized in that** provided in the second side wall (16) is a recess (30; 130; 230), which extends at least in the region between the projection (24; 136; 236, 236') and the web (18), and that the housing (12) has a flap (26; 126; 226) formed integrally therewith, which can at least partially close the recess (30; 130; 230) in the second side wall (16).

2. The housing according to Claim 1, **characterized in that** the flap (26; 126; 226) is formed integrally with the web (18).

3. The housing according to either of the preceding claims, **characterized in that** the projection (236) extends up to the second side wall (16), preferably without being connected in one piece or securely thereto.

4. The housing according to any of the preceding claims, **characterized in that** the projection (136; 236, 236') has a through opening and forms a passage through the housing (12).

5. The housing according to Claim 4, **characterized in that** the passage (136; 236, 236') extends perpendicularly to the longitudinal axis of the housing (12).

6. The housing according to Claim 4 or 5, **characterized in that** the flap (226) has at least one opening (252) which, with the flap closed, is in alignment with the passage (236, 236') through the housing (12).

7. The housing according to any of the preceding claims, **characterized in that** the flap (226) has a fastening element (244) which, with the flap (226) closed, engages the second side wall (16) and fixes the flap (226) in position.

8. The housing according to Claim 7, **characterized in that** the fastening element (244) is a strip.

9. The housing according to any of Claims 4 to 6, **characterized in that** the flap (126) has a fastening element (142) which, with the flap (126) closed, engages the passage (136) and fixes the flap (126) in position.

10. The housing according to any of the preceding claims, **characterized in that** it is an injection-moulded plastic part.

11. The housing according to any of the preceding claims, **characterized in that** at least one side wall (14, 16) has closure elements (250) formed integrally therewith, which can close the housing (12).

12. An occupant safety device, comprising a housing according to any of the preceding claims and a side gas bag (20) accommodated in the housing (12), the projection having a through opening to form a passage, and a part fastened to a roof frame projecting through the passage (136; 236).

13. The occupant safety device according to Claim 12, **characterized in that** the part is a luggage rack bar or a handle.

14. The occupant safety device according to Claim 12 or 13, **characterized in that** the housing (12) is adapted to be fastened to a roof frame or to a part arranged thereon by means of at least one of the passages (136; 236).

## Revendications

1. Boîtier pour un coussin à gaz latéral d'un dispositif de sécurité de passager de véhicule, comportant des première et deuxième parois latérales (14, 16) et une traverse (18) reliant les deux parois latérales (14, 16) et réalisée d'un seul tenant avec celles-ci, au moins une saillie (24 ; 124) étant façonnée sur la première paroi latérale (14) et réalisée d'un seul tenant avec la première paroi latérale (14) et s'étendant en direction de la deuxième paroi latérale (16), **caractérisé en ce que** dans la deuxième paroi latérale (16) est prévu un évidement (30 ; 130 ; 230) qui s'étend au moins dans la région entre la saillie (24 ; 136 ; 236, 236') et la traverse (18), et **en ce que** sur le boîtier (12) est façonné d'un seul tenant un volet (26 ; 126 ; 226) qui peut fermer au moins partiellement l'évidement (30 ; 130 ; 230) dans la deuxième paroi latérale (16).

2. Boîtier selon la revendication 1, **caractérisé en ce que** le volet (26 ; 126 ; 226) est façonné sur la traverse (18).

3. Boîtier selon l'une des revendications précédentes, **caractérisé en ce que** la saillie (236) s'étend jusqu'à la deuxième paroi latérale (16), de préférence sans être reliée d'un seul tenant ou de manière solidaire avec celle-ci.

4. Boîtier selon l'une des revendications précédentes, **caractérisé en ce que** la saillie (136 ; 236, 236') présente une ouverture traversante et forme un passage à travers le boîtier (12).

5. Boîtier selon la revendication 4, **caractérisé en ce que** le passage (136; 236, 236') s'étend perpendiculairement à l'axe longitudinal du boîtier (12).

6. Boîtier selon la revendication 4 ou 5, **caractérisé en ce que** le volet (226) présente au moins une ouverture (252) qui, lorsque le volet est fermé, est en alignement avec le passage (236, 236') à travers le boîtier (12).

7. Boîtier selon l'une des revendications précédentes, **caractérisé en ce que** le volet (226) présente un élément de fixation (244) qui, lorsque le volet est fermé, s'engage sur la deuxième paroi latérale (16) et fixe le volet (226) en position.

8. Boîtier selon la revendication 7, **caractérisé en ce que** l'élément de fixation (244) est une baguette.

9. Boîtier selon l'une des revendications 4 à 6, **caractérisé en ce que** le volet (126) présente un élément de fixation (142) qui, lorsque le volet (126) est fermé, s'engage sur le passage (136) et fixe le volet (126) en position.

10. Boîtier selon l'une des revendications précédentes, **caractérisé en ce qu'**il est une pièce de matière plastique moulée.

11. Boîtier selon l'une des revendications précédentes, **caractérisé en ce que** sur au moins une paroi latérale (14, 16) sont façonnés des éléments de fermeture (250) qui peuvent fermer le boîtier (12).

12. Dispositif de sécurité de passager, comportant un boîtier selon l'une des revendications précédentes, et un coussin à gaz latéral (20) logé dans le boîtier (12), la saillie présentant une ouverture traversante pour former un passage, et une pièce fixée sur un cadre de toit faisant saillie à travers le passage (136 ; 236).

13. Dispositif de sécurité de passager selon la revendication 12, **caractérisé en ce que** la pièce est une barre de filet à bagages ou une poignée.

14. Dispositif de sécurité de passager selon la revendication 12 ou 13, **caractérisé en ce que** le boîtier (12) peut être fixé sur un cadre de toit ou sur une pièce agencée sur celui-ci via au moins un des passages (136 ; 236).
